# FASCICULE DE BREVET EUROPEEN

(11) **EP 3 090 463 B1**
(45) Date de publication et mention de la délivrance du brevet: **12.10.2022**
(21) Numéro de dépôt: 14827214.9
(22) Date de dépôt: 19.12.2014
(51) Int. Cl.: H01M 10/0568, H01M 10/0569, H01G 11/04, H01G 11/32, H01G 11/68, H01M 12/02, H01M 4/587, H01M 10/054, H01G 11/10, H01M 10/052, H01G 11/08, H01G 15/00, H01G 11/60, H01G 11/62

(54) **CELLULE ELECTROCHIMIQUE, SYSTEME DE STOCKAGE D'ENERGIE ET VEHICULE COMPRENANT UN TEL SYSTEME**
ELEKTROCHEMISCHE ZELLE, ENERGIESPEICHERSYSTEM UND DAMIT AUSGESTATTETES FAHRZEUG
ELECTROCHEMICAL CELL, ENERGY STORING SYSTEM AND VEHICLE EQUIPPED THEREWITH

(30) Priorité: 03.01.2014 FR 1450030
(43) Date de publication de la demande: 09.11.2016
(73) Titulaire: Commissariat à l'Énergie Atomique et aux Énergies Alternatives, 75015 Paris (FR)
(72) Inventeur: PICOT, Matthieu, F-44230 Saint Sébastien sur Loire (FR); AZAIS, Philippe, F-38120 Saint Egreve (FR)
(74) Mandataire: Brevalex
(86) Numéro de dépôt international: PCT/EP2014/078780
(87) Numéro de publication internationale: WO 2015/101527

(56) Documents cités:
- EP-A1- 1 239 495
- FR-A1- 2 927 472
- JP-A- 2001 351 688
- US-A1- 2011 151 286

## Description

### DOMAINE TECHNIQUE

La présente invention se rapporte à une cellule électrochimique comprenant au moins deux systèmes électrochimiques différents, ces systèmes électrochimiques se différenciant par des densités d'énergie et de puissance distinctes, ayant pour incidence de fonctionner de façon antagoniste.

La présente invention se rapporte également à un système de stockage et de restitution d'énergie électrique comprenant une telle cellule électrochimique.

Ces cellule électrochimique et système de stockage et de restitution d'énergie électrique trouvent notamment leur application dans l'alimentation électrique des véhicules et, plus particulièrement, des véhicules hybrides.

### ÉTAT DE LA TECHNIQUE ANTÉRIEURE

A l'heure actuelle, la mise en place de normes environnementales, dans le but de préserver au mieux la santé des personnes et sauvegarder leur environnement, fait partie des préoccupations majeures des instances internationales et européennes.

A titre d'exemple, dans le domaine de l'automobile, l'Union européenne édicte des normes environnementales qui visent à réduire les émissions de polluants dans l'air, parmi lesquels le dioxyde de carbone CO₂. Pour ce faire, ces normes fixent des limites à ne pas dépasser, sous peine de sanctions économiques.

Ces normes évoluant constamment dans le sens d'une réduction des émissions de polluants, les constructeurs automobiles sont dans l'obligation de trouver des solutions technologiques permettant de limiter au maximum la quantité de polluants rejetés dans l'atmosphère par les véhicules tels que voitures, autobus et camions.

Parmi les solutions retenues par les constructeurs automobiles pour limiter ces émissions de polluants, la technologie de l'hybridation semble s'imposer comme technologie-clé à moyen et long termes.

L'hybridation est, par définition, la combinaison d'au moins deux sources d'énergie distinctes utilisées pour le déplacement d'un véhicule.

Dans le domaine de l'automobile, la forme d'hybridation la plus courante combine l'énergie thermique et l'énergie électrique. Un véhicule hybride fait donc appel à un moteur thermique et à un système électrique mettant en œuvre, par exemple, un supercondensateur ou un accumulateur.

Dans ce domaine de l'automobile, on distingue différents degrés d'hybridation en fonction de l'importance du système électrique dans la locomotion du véhicule et de la façon dont ce système électrique est combiné avec le moteur thermique.

Le tableau 1 ci-dessous présente les différents types de véhicules hybrides connus à ce jour, de celui qui présente le degré d'hybridation le plus faible (véhicule dit "micro-hybride") à celui qui présente le degré d'hybridation le plus important (véhicule dit "hybride rechargeable"). La terminologie anglo-saxonne, classiquement utilisée dans le domaine des voitures hybrides, est précisée au regard de la terminologie correspondante en français. Le tableau 1 précise en outre, pour chaque degré d'hybridation, la puissance délivrée par le système électrique ainsi que la nature du système électrochimique présent dans ce système électrique et permettant le stockage et la restitution de l'énergie électrique.

**Tableau 1**

| Degré d'hybridation | | Puissance délivrée (kW) | Système électrochimique |
|---|---|---|---|
| Terminologie française | Terminologie anglo-saxonne | | |
| Micro-hybride | Stop and Start | 2 | supercondensateur |
| Se mi-hybride | Mild hybrid | de 8 à 15 | supercondensateur hybride |
| Full-hybride | Full hybrid | de 20 à 25 | accumulateur |
| Hybride rechargeable | Plug-in hybrid | 30 | accumulateur |

Le système électrique d'un véhicule micro-hybride ou "stop and start" met en œuvre un alternateur réversible, encore dénommé "alterno-démarreur", qui permet d'assurer le démarrage ainsi que la coupure automatique du moteur thermique lors de l'immobilisation du véhicule, qui peut être fréquente, notamment en agglomération (feux rouges, embouteillages, par exemple).

Le système électrique d'un véhicule semi-hybride ou "mild hybrid" permet de récupérer l'énergie cinétique produite pendant les phases de décélération et de freinage, en plus d'assurer les fonctionnalités décrites précédemment pour le système électrique d'un véhicule micro-hybride. Cette énergie cinétique récupérée, qui est stockée dans des supercondensateurs, fournit un appoint de puissance au moteur thermique dans les phases de démarrage, d'accélération et de reprise du véhicule.

Un véhicule full-hybride ou "full hybrid" peut, quant à lui, être propulsé par le système électrique seul, par le moteur thermique seul ou par la combinaison des deux systèmes. L'énergie électrique, qui est produite par le moteur thermique ainsi que par la récupération de l'énergie au freinage, est stockée dans des accumulateurs.

Un véhicule hybride rechargeable ou "plug-in hybrid" est une variante du véhicule full-hybride, dans laquelle le rechargement de l'accumulateur du véhicule à l'arrêt s'effectue indépendamment du fonctionnement du moteur thermique, au moyen d'une prise de courant.

En fonction du degré d'hybridation du véhicule et, ce faisant, de la puissance à délivrer par le système électrique, les systèmes électrochimiques permettant le stockage et la restitution de l'énergie électrique ne sont pas les mêmes.

Ainsi, pour un degré d'hybridation micro-hybride, le système électrochimique est typiquement un supercondensateur, c'est-à-dire un dispositif qui, bien que ne permettant pas de stocker une quantité d'énergie électrique importante, permet de la restituer à un régime élevé. Il est précisé que les termes "supercapacité" et "ultracapacité", tous deux synonymes de "supercondensateur", sont également employés dans la littérature.

A l'inverse, dans le cas d'un degré d'hybridation full-hybride ou hybride rechargeable, le système électrochimique utilisé, qui doit permettre de stocker une quantité importante d'énergie électrique qui n'est cependant pas restituée à un régime élevé, est typiquement un accumulateur, également dénommé "batterie", et peut être, par exemple, un accumulateur du type lithium-ion.

Dans le cas d'une hybridation du type semi-hybride, le système électrochimique est un supercondensateur dit "supercondensateur hybride" ou encore "supercondensateur asymétrique". Les caractéristiques de stockage et de restitution de l'énergie électrique d'un tel supercondensateur hybride sont un compromis entre les caractéristiques correspondantes des supercondensateur et accumulateur mentionnés précédemment.

Dans un schéma idéal, il serait souhaitable de disposer d'un véhicule hybride qui puisse répondre à au moins deux des degrés d'hybridation présentés dans le tableau 1 ci-dessus, voire à l'ensemble de ces degrés d'hybridation. Or, comme on vient de le voir, répondre à deux ou même à tous ces degrés d'hybridation impose de mettre en œuvre, dans le système électrique embarqué du véhicule, des systèmes électrochimiques correspondants qui ne sont pas compatibles entre eux. En effet, un supercondensateur, qui fait partie des systèmes électrochimiques dits "de puissance", ne peut pas être utilisé à la place d'un accumulateur qui fait partie des systèmes électrochimiques dits "d'énergie".

Pour disposer d'un tel véhicule hybride, une première solution consisterait à doter le système électrique embarqué de ce véhicule des deux ou trois systèmes électrochimiques décrits ci-dessus, à savoir un supercondensateur, un supercondensateur hybride et un accumulateur. Toutefois, pour des raisons évidentes notamment en termes de volume et de poids, cette première solution n'est pas satisfaisante, tant d'un point de vue économique que d'un point de vue environnemental.

Des dispositifs de stockage d'énergie électrique comprenant deux systèmes électrochimiques différents et, en l'espèce, constitués par un accumulateur et un supercondensateur ont déjà été décrits, notamment dans les documents FR 2 927 472 A1, US 2011/151286 A1 et JP 2001-351688 A.

Le but de la présente invention est, par conséquent, de pallier les inconvénients de cette première solution et de lui trouver une alternative qui soit économiquement viable et qui réponde de surcroît aux exigences environnementales afin de disposer d'un système de stockage et de restitution de l'énergie électrique utilisable dans le système d'énergie électrique embarqué d'un véhicule hybride, ledit véhicule hybride étant susceptible de répondre à au moins deux des degrés d'hybridation tels que présentés dans le tableau 1 ci-dessus, voire à l'ensemble des trois degrés d'hybridation.

### EXPOSÉ DE L'INVENTION

Le but précédemment énoncé ainsi que d'autres sont atteints, en premier lieu, par une cellule électrochimique présentant une structure particulière.

Selon l'invention, cette cellule électrochimique comprend une enveloppe délimitant un espace rempli d'une solution électrolytique ainsi qu'un ensemble d'au moins deux systèmes électrochimiques différents choisis parmi un supercondensateur, un supercondensateur hybride et un accumulateur,
- le supercondensateur comprenant une électrode positive comprenant du carbone activé et une électrode négative comprenant du carbone activé,
- le supercondensateur hybride comprenant une électrode positive comprenant du carbone activé et une électrode négative comprenant un métal ou un matériau carboné d'intercalation d'au moins un métal alcalin noté M, ledit matériau étant différent du carbone activé utilisé à l'électrode positive, et
- l'accumulateur comprenant une électrode positive comprenant un oxyde, ou un composé polyanionique, d'un métal de transition et une électrode négative comprenant un matériau carboné d'intercalation d'au moins un métal alcalin noté M,
l'ensemble étant disposé dans l'espace rempli de la solution électrolytique et comprend ledit supercondensateur hybride.

La cellule électrochimique selon l'invention permet donc la mise en œuvre, au sein d'une même structure formée par l'enveloppe, de deux ou trois systèmes électrochimiques différents, en ce sens qu'ils répondent chacun à un degré d'hybridation particulier, micro-hybride, semi-hybride ou encore full-hybride avec sa variante hybride rechargeable.

Cette cellule électrochimique consiste donc bien en une alternative à la juxtaposition de ces mêmes deux ou trois systèmes électrochimiques, tout en assurant un gain de place, de poids et de matière. Ce gain de matière est accru par le fait que ces systèmes électrochimiques sont disposés, non seulement dans la même structure mais, de surcroît, dans la même solution électrolytique. Ainsi, en mutualisant l'un des éléments essentiels de ces systèmes électrochimiques que constitue la solution électrolytique, la cellule électrochimique selon l'invention présente, en outre, l'avantage indéniable de simplifier la réalisation d'une telle cellule électrochimique.

Comme on vient de le voir, la cellule électrochimique selon l'invention peut comprendre un ensemble formé de deux systèmes électrochimiques différents, un des systèmes électrochimiques étant un supercondensateur hybride, l'autre étant choisi parmi un supercondensateur et un accumulateur.

La cellule électrochimique selon l'invention peut donc comprendre un ensemble constitué par un supercondensateur et un supercondensateur hybride ou encore par un supercondensateur hybride et un accumulateur.

La cellule électrochimique selon l'invention peut également comprendre un ensemble formé des trois systèmes électrochimiques et, par conséquent, comprendre un supercondensateur, un supercondensateur hybride et un accumulateur.

Avant de poursuivre l'exposé de la présente invention et présenter des modes de réalisation particuliers de la cellule électrochimique, il y a lieu de faire un rappel des caractéristiques des différents systèmes électrochimiques susceptibles d'être mis en œuvre et de préciser certaines des terminologies utilisées dans ce qui vient d'être décrit et dans ce qui va suivre.

Le système électrochimique constitué par un supercondensateur est un système électrochimique dit "de puissance" qui présente une forte densité de puissance mais une faible densité d'énergie. En d'autres termes, le supercondensateur est un système électrochimique qui ne permet pas de stocker une quantité importante d'énergie électrique mais qui, par contre, permet de la stocker et de la restituer avec une forte intensité.

De manière classique, le supercondensateur fonctionne sur le principe de la double-couche électrochimique (en anglais, Electrochemical Double Layer Capacitor et abrégé EDLC) et comprend des électrodes positive et négative comprenant toutes deux du carbone activé. Cette double-couche électrochimique se développe sur chaque interface électrode/solution électrolytique. Du fait de l'existence de ces deux interfaces formant chacune une double-couche électrochimique, le supercondensateur peut être considéré comme l'association en série de deux condensateurs, l'un à l'électrode positive et l'autre à l'électrode négative.

Plus particulièrement, les électrodes positive et négative du supercondensateur sont, toutes deux, des électrodes poreuses comprenant du carbone activé.

Le système électrochimique constitué par un accumulateur est un système électrochimique dit "d'énergie" qui présente une forte densité d'énergie mais une faible densité de puissance. En d'autres termes, l'accumulateur est un système électrochimique qui permet de stocker une quantité importante d'énergie électrique mais qui, par contre, ne permet pas de la stocker et de la restituer avec une forte intensité.

Parmi les différents types d'accumulateurs disponibles, on s'intéresse plus particulièrement à un accumulateur qui comprend une électrode négative comprenant un matériau carboné d'intercalation d'au moins un métal alcalin noté M et une électrode positive comprenant un oxyde d'un métal de transition ou un composé polyanionique d'un métal de transition.

Pour l'accumulateur, qui peut fonctionner aussi bien en charge qu'en décharge, il est précisé que par "électrode positive", on entend l'électrode qui fait office de cathode lorsque l'accumulateur est en processus de décharge, c'est-à-dire lorsqu'il débite du courant, et qui fait office d'anode lorsque cet accumulateur est en processus de charge. A l'inverse, par "électrode négative", on entend l'électrode qui fait office d'anode lorsque l'accumulateur est en processus de décharge, c'est-à-dire lorsqu'il débite du courant, et qui fait office de cathode lorsque cet accumulateur est en processus de charge.

Le système électrochimique constitué par un supercondensateur hybride est, quant à lui, un système électrochimique intermédiaire entre un système électrochimique dit "de puissance" et un système électrochimique dit "d'énergie".

Le supercondensateur hybride comprend deux électrodes, l'une (classiquement, l'électrode positive) étant en un matériau utilisé pour l'une des deux électrodes d'un supercondensateur et l'autre (classiquement, l'électrode négative) étant en un matériau utilisé pour l'une des deux électrodes d'un accumulateur. Un tel supercondensateur hybride fonctionne sur le principe selon lequel le stockage de charges électriques, au niveau de l'électrode négative, se produit par le biais d'une réaction d'oxydoréduction qui se matérialise notamment par une intercalation de l'élément alcalin présent dans la solution électrolytique, tandis que le stockage de charges électriques, au niveau de l'électrode positive, se produit par le biais de la formation d'une double-couche électrochimique. Cette électrode positive constitue, au sens strict, une électrode répondant au fonctionnement du supercondensateur.

Plus particulièrement, l'électrode positive du supercondensateur hybride comprend du carbone activé et l'électrode négative comprend un métal ou un matériau carboné d'intercalation d'au moins un métal alcalin noté M, ce matériau carboné d'intercalation étant bien entendu différent du carbone activé utilisé à l'électrode positive.

Selon l'invention, l'ensemble de la cellule électrochimique comprend le supercondensateur hybride.

Dans une première variante, l'ensemble de cette cellule électrochimique comprend en outre le supercondensateur. Ainsi, la cellule électrochimique comprend un ensemble formé par le supercondensateur hybride et le supercondensateur.

Les électrodes positive et négative du supercondensateur hybride ainsi que les électrodes positive et négative du supercondensateur peuvent être disposées dans la solution électrolytique contenue dans l'espace délimité par l'enveloppe de la cellule électrochimique.

Dans une version particulièrement avantageuse de cette première variante, on peut tout à fait envisager une cellule électrochimique dans laquelle l'électrode positive du supercondensateur hybride constitue également l'électrode positive du supercondensateur. Ainsi, l'ensemble ne comprend plus quatre électrodes, mais seulement trois, ce qui permet un gain de place et de matière supplémentaire tout en conservant les performances individuelles de chacun des deux systèmes électrochimiques. Ce constat est clairement illustré par les résultats des tests de voltampérométrie cyclique conduits sur les cellules électrochimiques des exemples 1 et 2 exposés ci-après.

Dans une seconde variante, l'ensemble de cette cellule électrochimique comprend en outre l'accumulateur. Ainsi, la cellule électrochimique comprend un ensemble formé par le supercondensateur hybride et l'accumulateur.

Les électrodes positive et négative du supercondensateur hybride ainsi que les électrodes positive et négative de l'accumulateur peuvent être disposées dans la solution électrolytique contenue dans l'espace délimité par l'enveloppe de la cellule électrochimique.

Dans une version particulièrement avantageuse de cette seconde variante, on peut tout à fait envisager une cellule électrochimique dans laquelle l'électrode négative du supercondensateur hybride, lorsqu'elle comprend le matériau carboné d'intercalation d'au moins un métal alcalin M, constitue également l'électrode négative de l'accumulateur. Ainsi, comme dans le cas de la première variante, l'ensemble ne comprend plus quatre électrodes, mais seulement trois, sans nuire aux performances individuelles de chacun des deux systèmes électrochimiques.

Selon un autre mode de réalisation avantageux de l'invention, l'ensemble de la cellule électrochimique comprend le supercondensateur, le supercondensateur hybride et l'accumulateur.

Les électrodes positive et négative du supercondensateur, les électrodes positive et négative du supercondensateur hybride ainsi que les électrodes positive et négative de l'accumulateur peuvent être, toutes les six, disposées dans la solution électrolytique contenue dans l'espace délimité par l'enveloppe de la cellule électrochimique.

On peut cependant avantageusement envisager que l'électrode positive du supercondensateur hybride constitue également l'électrode positive du supercondensateur et/ou que l'électrode négative du supercondensateur hybride, lorsqu'elle comprend le matériau carboné d'intercalation d'au moins un métal alcalin M, constitue également l'électrode négative de l'accumulateur. Ainsi, la cellule électrochimique peut permettre de faire fonctionner trois systèmes électrochimiques différents en ne mettant en œuvre que cinq, voire quatre, électrodes disposées dans l'espace rempli de la solution électrolytique.

Dans la cellule électrochimique selon l'invention, l'ensemble d'au moins deux systèmes électrochimiques différents est disposé dans l'espace qui est délimité par l'enveloppe et qui est rempli d'une solution électrolytique.

Bien entendu, cette solution électrolytique doit permettre le bon fonctionnement de chacun des systèmes électrochimiques formant l'ensemble de la cellule électrochimique. Cette solution électrolytique comprend au moins un solvant et au moins un électrolyte.

De manière avantageuse, l'électrolyte est un électrolyte ionique.

Préférentiellement, l'électrolyte comprend un sel de métal alcalin répondant à la formule MA et comprenant un cation M⁺ du métal alcalin, noté M, et un groupement anionique, noté A⁻.

Le métal alcalin M peut ainsi être choisi parmi le lithium Li, le sodium Na, le potassium K, le rubidium Rb, le césium Cs et les mélanges de ceux-ci. Le métal alcalin M est avantageusement choisi parmi Li, Na, K et les mélanges de ceux-ci.

Lorsque l'ensemble de la cellule électrochimique selon l'invention comprend notamment l'accumulateur comme système électrochimique, le métal alcalin M présent dans l'électrolyte MA est choisi de telle sorte que le cation métallique M⁺ correspondant s'intercale dans le matériau d'intercalation de l'électrode négative de l'accumulateur de manière à former, avec ce dernier, un composé appelé "composé d'intercalation du graphite" (en anglais, Graphite Intercalation Compound et abrégé GIC). Dans ce cas particulier, le métal alcalin M est, préférentiellement, le potassium K.

Le groupement anionique A⁻ peut, quant à lui, être choisi parmi les anions perchlorate ClO₄⁻, tétrachloroaluminate AlCl₄⁻, tétrafluoroborate BF₄⁻, hexafluorophosphate PF₆⁻, hexafluoroantimonate SbF₆⁻, hexafluoroarsénate AsF₆⁻, hexafluorosilicate SiF₆⁻, thiocyanate SCN⁻, bis(fluorosulfonyl)imide ou FSI⁻ (FSO₂)₂N⁻, bis(trifluorométhanesulfonyl)imide ou TFSI⁻ (CF₃SO₂)₂N⁻, bis(oxalato)borate BOB⁻, oxalyldifluoroborate ou difluoromono(oxalato)borate ODBF⁻, trifluorométhanesulfonate ou triflate SO₃CF₃⁻, et les mélanges de ceux-ci. Le groupement anionique A⁻ est avantageusement l'anion hexafluorophosphate PF₆⁻.

Dans une version avantageuse de l'invention, l'électrolyte est l'hexafluorophosphate de potassium KPF₆.

De manière avantageuse, le solvant est un solvant organique.

Ce solvant peut notamment être choisi parmi :
- un solvant nitrile, tel que l'acétonitrile, le 3-méthoxypropionitrile (MPN), l'adiponitrile (ADP) ou encore le glutaronitrile (GN),
- un solvant carbonate qui peut être un carbonate linéaire tel que le carbonate de diméthyle (DMC), le carbonate de diéthyle (DEC) ou encore le carbonate éthylique méthylique (EMC), ou un carbonate cyclique, tel que le carbonate d'éthylène (EC) ou encore le carbonate de propylène (PC),
- un solvant lactone, tel que la γ-butyrolactone (GBL) ou encore la γ-valérolactone (GVL),
- un solvant sulfone, tel que la diméthylsulfone (DMS), l'éthylméthylsulfone (EMS), la diéthylsulfone (DES) ou encore le sulfolane (SL),
- un solvant lactame, tel que la N-méthylpyrrolidone (NMP),
- un solvant amide, tel que le N,N-diméthylformamide (DMF), le diméthylacétamide (DMA), le formamide (FA) ou encore le N-méthylformamide (NMF),
- un solvant cétone, tel que l'acétone ou encore la méthyléthylcétone (MEK),
- un solvant nitroalcane tels que le nitrométhane (NM) ou encore le nitroéthane (NE),
- un solvant amine, tel que le 1,3-diaminopropane (DAP) ou encore l'éthylènediamine (EDA),
- un solvant sulfoxyde, tel que le diméthylsulfoxyde (DMSO),
- un solvant ester, tel que l'acétate d'éthyle (EA), l'acétate de méthyle (MA) ou encore l'acétate de propyle (AP),
- un solvant éther, qui peut être linéaire tel que le diméthoxyéthane (DME) ou cyclique, tel que le dioxane, le dioxolane (DIOX) ou encore le tétrahydrofurane (THF),
- un solvant oxazolidone tel que le 3-méthyl-2-oxazolidone, et
- les mélanges de ceux-ci.

Dans une version avantageuse de l'invention, le solvant de la solution électrolytique est l'acétonitrile.

Dans un mode de réalisation particulier de l'invention, l'électrolyte est présent, dans la solution électrolytique, dans une concentration molaire comprise entre 0,5 mol/l et 2 mol/l, avantageusement entre 0,8 mol/l et 1,5 mol/l et, préférentiellement, qui est de l'ordre de 1 mol/l.

Dans un mode de réalisation particulier de l'invention, au moins l'un des systèmes électrochimiques de l'ensemble de la cellule électrochimique peut comprendre, disposée entre ses électrodes positive et négative, au moins une membrane de séparation électriquement non conductrice. Une telle membrane de séparation est hydrauliquement perméable, ce qui signifie qu'elle laisse passer les ions.

Rien n'interdit d'envisager la présence de membranes de séparation entre les électrodes positive et négative de chacun des systèmes électrochimiques formant l'ensemble de la cellule électrochimique. On peut également envisager la présence d'une (ou de deux) membrane(s) de séparation entre les paires d'électrodes de deux (ou trois) systèmes électrochimiques formant ledit ensemble, à l'exception du cas où une (ou deux) électrode(s) est(sont) commune(s) auxdits systèmes électrochimiques. Les exemples 1 et 2 détaillés ci-après sont une illustration de ces modes de réalisation particuliers.

La membrane de séparation peut être en un matériau poreux apte à accueillir la solution électrolytique dans sa porosité. On dit alors que la solution électrolytique imbibe cette membrane de séparation.

On peut, en particulier, mettre en œuvre une membrane de séparation telle que disponible commercialement auprès de la société Treofan, comme dans les exemples 1 et 2 ci-après.

Dans un mode de réalisation particulier de l'invention, au moins l'une des électrodes des systèmes électrochimiques peut comprendre un collecteur de courant, ce collecteur de courant se présentant, avantageusement, sous la forme d'une feuille métallique, de préférence laminée. Cette feuille métallique, qui est classiquement réalisée en aluminium, permet d'assurer la connexion électrique.

Pour constituer une électrode, cette feuille métallique est ensuite revêtue, par exemple par enduction, d'une composition comprenant le matériau adapté à la polarité de l'électrode et au système électrochimique dans lequel cette électrode va être intégrée.

Vont être détaillées ci-après, différentes variantes envisageables pour la réalisation des compositions formant les matériaux électro-chimiquement actifs des électrodes, positive et négative, des différents systèmes électrochimiques susceptibles d'entrer dans la constitution de l'ensemble de la cellule électrochimique selon l'invention.

^{∗} Lorsque l'électrode comprend du carbone activé, ce qui est le cas des électrodes positive et négative du supercondensateur ainsi que de l'électrode positive du supercondensateur hybride, le carbone activé est avantageusement présent, dans la composition formant le matériau électro-chimiquement actif, en une teneur massique d'au moins 60% par rapport à la masse totale de l'électrode considérée, étant entendu que cette masse totale de l'électrode considérée n'intègre pas la masse du collecteur de courant éventuellement présent au sein de ladite électrode. De préférence, le carbone activé est présent en une teneur massique comprise entre 65% et 95% par rapport à la masse totale de l'électrode, les valeurs des bornes des intervalles étant comprises.

La composition de l'électrode comprenant du carbone activé peut, en outre, avantageusement comprendre au moins un liant qui contribue à assurer la cohésion mécanique de l'électrode, et/ou au moins un composé électriquement conducteur.

Parmi les liants susceptibles d'être utilisés dans cette composition à base de carbone activé, on peut notamment citer la carboxyméthylcellulose (CMC), mais il reste tout à fait envisageable d'utiliser d'autres liants polymériques tels que des polymères fluorés, des polyimides, des polyacrylonitriles, des élastomères ou encore des mélanges de ceux-ci. Parmi les élastomères, on peut plus particulièrement citer les élastomères de styrène-butadiène.

Parmi les composés électriquement conducteurs, on peut citer des composés carbonés autres que du carbone activé, comme des noirs de carbone, des noirs d'acétylène, du graphite, des nanotubes de carbone, des fibres de carbone telles que les fibres de carbone à croissance en phase vapeur (en anglais, Vapor Grown Carbon Fiber et abrégé VGCF) et les mélanges de ceux-ci.

^{∗} Lorsque l'électrode comprend un matériau carboné d'intercalation d'au moins un métal alcalin M, ce qui est le cas de l'électrode négative de l'accumulateur et qui peut également être le cas de l'électrode négative du supercondensateur hybride, le matériau carboné d'intercalation d'au moins un métal alcalin M est avantageusement du graphite.

Le matériau carboné d'intercalation d'au moins un métal alcalin M tel que le graphite est avantageusement présent, dans la composition formant le matériau électro-chimiquement actif, en une teneur massique d'au moins 60% et, de préférence, d'au moins 80% en masse par rapport à la masse totale de l'électrode considérée, étant entendu que cette masse totale de l'électrode considérée n'intègre pas la masse du collecteur de courant éventuellement présent au sein de ladite électrode.

Comme dans le cas de la composition de l'électrode comprenant du carbone activé, la composition de l'électrode comprenant le matériau carboné d'intercalation d'au moins un métal alcalin M peut, en outre, avantageusement comprendre au moins un liant qui contribue à assurer la cohésion mécanique de l'électrode, et/ou au moins un composé électriquement conducteur.

Les liants et composés électriquement conducteurs susceptibles d'être utilisés dans cette composition à base de matériau carboné d'intercalation d'au moins un métal alcalin M peuvent être les mêmes que ceux qui ont été cités précédemment pour la composition de l'électrode comprenant du carbone activé.

^{∗} Lorsque l'électrode comprend un composé polyanionique d'un métal de transition, ce qui peut être le cas de l'électrode positive du supercondensateur hybride, ce composé polyanionique est avantageusement un phosphate d'un métal de transition.

La cellule électrochimique selon l'invention peut se présenter sous différentes formes structurelles, et notamment sous la forme d'une pile cylindrique, d'une pile bouton, ou d'une cellule de poche (en anglais, "pouch cell"). De préférence, elle se présente sous la forme d'une cellule de poche.

La présente invention se rapporte, en deuxième lieu, à un système de stockage et de restitution d'énergie électrique.

Selon l'invention, ce système de stockage et de restitution d'énergie électrique comprend une cellule électrochimique telle que définie ci-dessus, les caractéristiques avantageuses de cette cellule électrochimique pouvant être prises seules ou en combinaison, et au moins une interface électronique adaptée pour la sélection d'un système électrochimique en fonction d'un degré d'hybridation.

Ainsi, l'interface électronique permet de sélectionner le système électrochimique parmi le supercondensateur, le supercondensateur hybride et/ou l'accumulateur, le plus adapté pour le stockage ou la restitution d'énergie électrique en fonction du degré d'hybridation requis dans l'application envisagée.

Dans une variante avantageuse de ce système de stockage et de restitution d'énergie électrique, l'interface électronique est en outre adaptée pour commander l'échange d'énergie électrique entre les systèmes électrochimiques.

La présente invention se rapporte, en dernier lieu, à un véhicule.

Selon l'invention, ce véhicule comprend au moins un système de stockage et de restitution d'énergie électrique tel que défini ci-dessus, pris seul ou en combinaison avec sa variante avantageuse.

De manière plus particulièrement avantageuse, ce véhicule est un véhicule hybride, tel qu'une voiture, un autobus ou encore un camion.

D'autres caractéristiques et avantages de l'invention apparaîtront mieux à la lecture du complément de description qui suit, qui se rapporte à des modes de réalisation particuliers de l'invention.

Ce complément de description, qui se réfère notamment aux figures 1 à 9 telles qu'annexées, est donné à titre d'illustration de l'objet de l'invention et ne constitue en aucun cas une limitation de cet objet.

### BRÈVE DESCRIPTION DES DESSINS

La figure 1 est un cliché d'une cellule électrochimique conforme à l'invention comprenant deux systèmes électrochimiques, un supercondensateur et un supercondensateur hybride, chaque système électrochimique comprenant une électrode positive et une électrode négative.
La figure 2 est une représentation schématique en coupe longitudinale de la structure interne de la cellule électrochimique de la figure 1.
La figure 3 illustre la courbe obtenue en voltampérométrie cyclique traduisant l'évolution du courant (noté I et exprimé en mA) en fonction de la différence de potentiel (notée E et exprimée en V) appliquée entre les électrodes positive et négative du système électrochimique formé par le supercondensateur hybride de la cellule électrochimique de la figure 1.
La figure 4 illustre la courbe obtenue en voltampérométrie cyclique traduisant l'évolution du courant (noté I et exprimé en mA) en fonction de la différence de potentiel (notée E et exprimée en V) appliquée entre les électrodes positive et négative du système électrochimique formé par le supercondensateur de la cellule électrochimique de la figure 1.
La figure 5 est un cliché d'une cellule électrochimique conforme à l'invention comprenant deux systèmes électrochimiques, un supercondensateur et un supercondensateur hybride, ces deux systèmes électrochimiques partageant la même électrode positive.
La figure 6 est une représentation schématique en coupe longitudinale de la structure interne de la cellule électrochimique de la figure 5.
La figure 7 illustre la courbe obtenue en voltampérométrie cyclique traduisant l'évolution du courant (noté I et exprimé en mA) en fonction de la différence de potentiel (notée E et exprimée en V) appliquée entre les électrodes positive et négative du système électrochimique formé par le supercondensateur hybride de la cellule électrochimique de la figure 5.
La figure 8 illustre la courbe obtenue en voltampérométrie cyclique traduisant l'évolution du courant (noté I et exprimé en mA) en fonction de la différence de potentiel (notée E et exprimée en V) appliquée entre les électrodes positive et négative du système électrochimique formé par le supercondensateur de la cellule électrochimique de la figure 5.
La figure 9 est un schéma synoptique d'un système de stockage et de restitution d'énergie électrique conforme à l'invention.

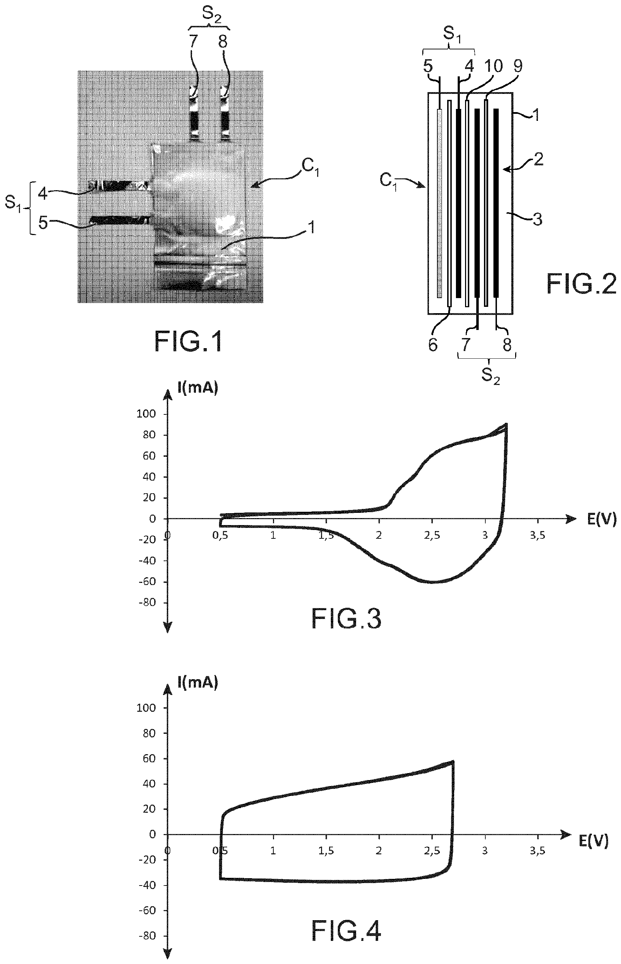

Il est précisé que les éléments communs aux figures 1, 2, 5 et 6 sont identifiés par la même référence numérique.

### EXPOSÉ DÉTAILLÉ DE MODES DE RÉALISATION PARTICULIERS

Les présents exemples 1 et 2 illustrent le comportement d'une cellule électrochimique conforme à l'invention et mettant en œuvre un ensemble de deux systèmes électrochimiques différents, un supercondensateur et un supercondensateur hybride.

L'exemple 3 illustre un système de stockage et de restitution d'énergie électrique conforme à l'invention.

Chaque électrode utilisée dans le cadre de ces exemples 1 et 2 a été préparée par enduction, sur un collecteur en aluminium de 30 µm d'épaisseur, de l'une ou l'autre des compositions A et B ci-dessous.

La composition A, qui permet de préparer une électrode comprenant du carbone activé, comprend, en pourcentage massique par rapport à la masse totale de ladite composition A :
- 84% de carbone activé de référence YP-50F commercialisé par la société Kuraray Chemical,
- 4% de liant styrène-butadiène de référence Styrofan^{®} LD 417 commercialisé par la société BASF,
- 8% de noir de carbone de référence C-NERGY^{™} SUPER C65 commercialisé par la société Timcal, et
- 4% de carboxyméthylcellulose (2% massique dans l'eau) de référence 7HXF commercialisée par la société Aqualon.

La composition B, qui permet de préparer une électrode comprenant du graphite comme matériau d'intercalation d'au moins un métal alcalin, comprend, en pourcentage massique par rapport à la masse totale de ladite composition B :
- 94% de carbone graphite de référence Timrex^{®}SLP30 commercialisé par la société Timcal,
- 2% de noir de carbone de référence C-NERGY^{™} SUPER C65 commercialisé par la société Timcal,
- 2% de carboxyméthylcellulose (2% massique dans l'eau) de référence 7HXF commercialisée par la société Aqualon, et
- 2% de liant styrène-butadiène de référence Styrofan^{®} LD 417 commercialisé par la société BASF.

Les électrodes ont été séparées au moyen de membranes de séparation microporeuses de 25 µm d'épaisseur et de référence TreoPore^{®} PDA 25 commercialisées par la société Treofan.

La solution électrolytique utilisée comprend de l'hexafluorophosphate de potassium KPF₆ comme électrolyte, à une concentration molaire de 1 mol/l dans de l'acétonitrile comme solvant.

### Exemple 1 : Cellule électrochimique à quatre électrodes

La cellule électrochimique de l'exemple 1, notée Ci, dont un cliché est reproduit à la figure 1, se présente sous la forme d'une cellule de poche.

En référence à la représentation schématique de la figure 2, cette cellule électrochimique C₁ comprend une enveloppe 1 délimitant un espace 2 qui est rempli d'une solution électrolytique 3 dont la composition a été précédemment détaillée (KPF₆ dans de l'acétonitrile à 1M).

La cellule électrochimique C₁ comprend, par ailleurs, un ensemble formé de deux systèmes électrochimiques S₁ et S₂.

Le système électrochimique S₁, qui est un supercondensateur hybride, comprend une électrode positive 4 et une électrode négative 5. L'électrode positive 4 est formée par enduction de la composition A sur le collecteur en aluminium dont l'extrémité est visible sur le cliché de la figure 1. L'électrode négative 5 est formée par enduction de la composition B sur le collecteur en aluminium dont l'extrémité est également visible sur le cliché de la figure 1. Le système électrochimique S₁ comprend en outre une membrane de séparation 6 disposée entre l'électrode positive 4 et l'électrode négative 5.

Le système électrochimique S₂, qui est un supercondensateur, comprend une électrode positive 7 et une électrode négative 8, ces électrodes 7 et 8 étant toutes deux formées par enduction, sur leur collecteur respectif en aluminium dont les extrémités respectives sont également visibles sur le cliché de la figure 1, de la composition A décrite ci-dessus. Le système électrochimique S₂ comprend en outre une membrane de séparation 9 disposée entre l'électrode positive 7 et l'électrode négative 8.

La cellule électrochimique C₁ comprend en outre une membrane de séparation 10 disposée entre les systèmes électrochimiques S₁ et S₂.

Des tests de voltampérométrie cyclique ont été conduits pour confirmer le fonctionnement de chacun des systèmes électrochimiques S₁ et S₂ de la cellule électrochimique C₁.

Dans une première étape, le test de voltampérométrie cyclique a été conduit pour évaluer le fonctionnement du système électrochimique S₁, en réalisant la connexion électrique entre l'électrode positive 4 et l'électrode négative 5. La courbe correspondante telle qu'obtenue au cours d'un cyclage réalisé à une vitesse de balayage de 10 mV/s, est illustrée sur la figure 3.

On observe que cette courbe de la figure 3 correspond à un voltammogramme typique d'un supercondensateur hybride, ce voltammogramme comprenant une première partie, située entre 0,5 V et 1,5 V, qui a l'allure d'un supercondensateur, et une seconde partie, située entre 1,5 V et 3,2 V, qui a l'allure d'un accumulateur. Le système électrochimique S₁ de la cellule électrochimique C₁ est donc bien fonctionnel.

Dans une seconde étape, le test de voltampérométrie cyclique a été conduit pour évaluer le fonctionnement du système électrochimique S₂, en réalisant la connexion électrique entre l'électrode positive 7 et l'électrode négative 8. La courbe correspondante telle qu'obtenue au cours d'un cyclage réalisé à une vitesse de balayage de 10 mV/s, est illustrée sur la figure 4.

On observe que cette courbe de la figure 4 correspond à un voltammogramme typique d'un supercondensateur, démontrant que le système électrochimique S₂ de la cellule électrochimique C₁ est donc également bien fonctionnel.

### Exemple 2 : Cellule électrochimique à trois électrodes

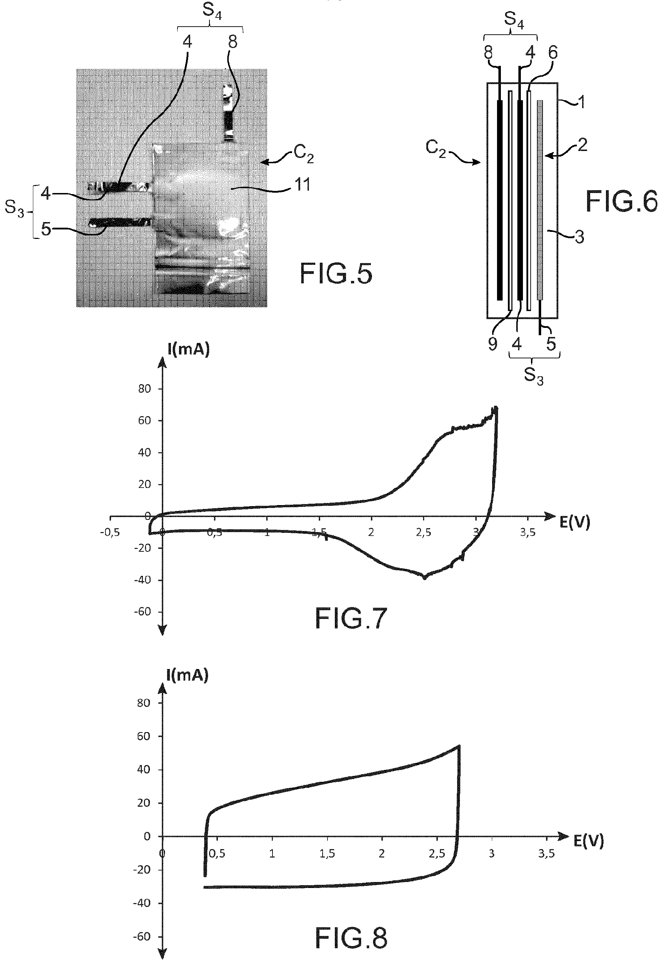

La cellule électrochimique de l'exemple 2, notée C₂, dont un cliché est reproduit à la figure 5, se présente également sous la forme d'une cellule de poche.

En référence à la représentation schématique de la figure 6, cette cellule électrochimique C₂ comprend une enveloppe 1 délimitant un espace 2 qui est rempli de la même solution électrolytique 3 que celle utilisée dans la cellule électrochimique C₁ de l'exemple 1 (KPF₆ dans de l'acétonitrile à 1M).

La cellule électrochimique C₂ comprend, par ailleurs, un ensemble formé de deux systèmes électrochimiques S₃ et S₄.

Le système électrochimique S₃ est un supercondensateur hybride et comprend une électrode positive 4 ainsi qu'une électrode négative 5. Comme dans le système électrochimique S₁ de l'exemple 1, l'électrode positive 4 de la cellule électrochimique C₂ est obtenue par enduction de la composition A sur un premier collecteur en aluminium, tandis que l'électrode négative 5 est obtenue par enduction de la composition B sur un deuxième collecteur en aluminium. Le système électrochimique S₃ comprend en outre une membrane de séparation 6 disposée entre l'électrode positive 4 et l'électrode négative 5.

Le système électrochimique S₄ est un supercondensateur et comprend, comme électrode positive, l'électrode positive 4 ainsi qu'une électrode négative 8. Cette électrode négative 8 est également obtenue par enduction de la composition A sur un troisième collecteur en aluminium. Le système électrochimique S₄ comprend en outre une membrane de séparation 9 disposée entre l'électrode positive 4 et l'électrode négative 8.

L'électrode positive 4 est donc une électrode commune aux deux systèmes électrochimiques S₃ et S₄ puisqu'elle constitue à la fois l'électrode positive du système électrochimique S₃ et l'électrode positive du système électrochimique S₄. De ce fait, et par construction, aucune membrane de séparation additionnelle n'est disposée entre les systèmes électrochimiques S₃ et S₄.

Des tests de voltampérométrie cyclique ont été conduits pour confirmer le fonctionnement de chacun des systèmes électrochimiques S₃ et S₄ de la cellule électrochimique C₂.

Dans une première étape, le test de voltampérométrie cyclique a été conduit pour évaluer le fonctionnement du système électrochimique S₃, en réalisant la connexion électrique entre l'électrode positive 4 et l'électrode négative 5. La courbe correspondante telle qu'obtenue au cours d'un cyclage réalisé à une vitesse de balayage de 10 mV/s, est illustrée sur la figure 7.

On observe que cette courbe de la figure 7 présente une allure similaire à celle de la courbe de la figure 3 et correspond donc à un voltammogramme typique d'un supercondensateur hybride, avec une première partie de courbe caractéristique d'un supercondensateur, et une seconde partie caractéristique d'un accumulateur. Le système électrochimique S₃ de la cellule électrochimique C₂ est donc bien fonctionnel.

Dans une seconde étape, le test de voltampérométrie cyclique a été conduit pour évaluer le fonctionnement du système électrochimique S₄, en réalisant la connexion électrique entre l'électrode positive 4 et l'électrode négative 8. La courbe correspondante telle qu'obtenue au cours d'un cyclage réalisé à une vitesse de balayage de 10 mV/s, est illustrée sur la figure 8.

On observe que cette courbe de la figure 8 présente une allure similaire à celle de la courbe de la figure 4 et correspond donc à un voltammogramme typique d'un supercondensateur, démontrant que le système électrochimique S₄ de la cellule électrochimique C₂ est donc également bien fonctionnel.

### Exemple 3 : Système de stockage et de restitution d'énergie électrique

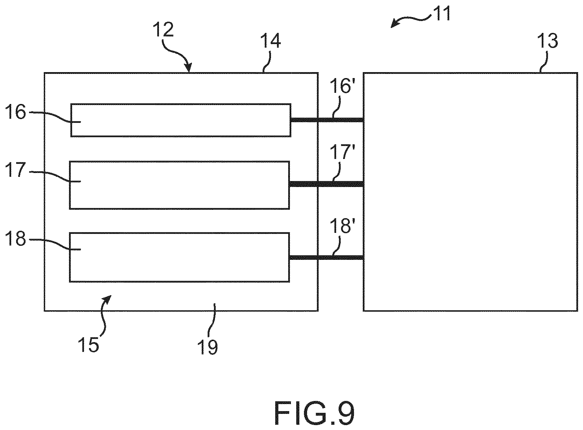

Un système de stockage et de restitution de l'énergie électrique conforme à l'invention est représenté à la figure 9.

Ce système de stockage et de restitution de l'énergie électrique 11 comprend une cellule électrochimique 12 et une interface électronique 13.

La cellule électrochimique 12 comprend une enveloppe 14 délimitant un espace 15 dans lequel est disposé un ensemble formé de trois systèmes électrochimiques différents 16, 17, 18, à savoir un supercondensateur, un supercondensateur hybride et un accumulateur. Cet espace 15 comprend en outre une solution électrolytique 19 formée d'un solvant et d'un électrolyte, cette solution électrolytique 19 étant compatible avec le fonctionnement de chacun des systèmes électrochimiques 16, 17 et 18.

Chaque système électrochimique 16, 17, 18 est connecté à l'interface électronique 13, par des moyens de connexion, respectivement 16', 17', 18'.

L'interface électronique 13 est adaptée pour la sélection d'un système électrochimique, parmi les trois systèmes électrochimiques 16, 17 et 18 de la cellule électrochimique 12, en fonction d'un degré d'hybridation.

Cette interface électronique 13 est, en outre, avantageusement adaptée pour commander l'échange d'énergie électrique entre les systèmes électrochimiques 16, 17 et 18.

## Revendications

1. Cellule électrochimique comprenant une enveloppe délimitant un espace rempli d'une solution électrolytique, ainsi qu'un ensemble d'au moins deux systèmes électrochimiques différents choisis parmi un supercondensateur, un supercondensateur hybride et un accumulateur, dans laquelle
- le supercondensateur comprend une électrode positive comprenant du carbone activé et une électrode négative comprenant du carbone activé,
- le supercondensateur hybride comprend une électrode positive comprenant du carbone activé et une électrode négative comprenant un métal ou un matériau carboné d'intercalation d'au moins un métal alcalin noté M, ledit matériau étant différent du carbone activé utilisé à l'électrode positive, et
- l'accumulateur comprend une électrode positive comprenant un oxyde, ou un composé polyanionique, d'un métal de transition et une électrode négative comprenant un matériau carboné d'intercalation d'au moins un métal alcalin noté M, et
dans laquelle l'ensemble est disposé dans l'espace rempli de la solution électrolytique et comprend ledit supercondensateur hybride.

2. Cellule électrochimique selon la revendication 1, dans laquelle l'ensemble comprend en outre ledit supercondensateur.

3. Cellule électrochimique selon la revendication 2, dans laquelle l'électrode positive du supercondensateur hybride constitue également l'électrode positive du supercondensateur.

4. Cellule électrochimique selon la revendication 1, dans laquelle l'ensemble comprend en outre ledit accumulateur.

5. Cellule électrochimique selon la revendication 4, dans laquelle l'électrode négative du supercondensateur hybride, lorsqu'elle comprend le matériau carboné d'intercalation d'au moins un métal alcalin M, constitue également l'électrode négative de l'accumulateur.

6. Cellule électrochimique selon l'une quelconque des revendications 1 à 5, dans laquelle l'ensemble comprend ledit supercondensateur, ledit supercondensateur hybride et ledit accumulateur.

7. Cellule électrochimique selon l'une quelconque des revendications 1 à 6, dans laquelle la solution électrolytique comprend au moins un solvant, avantageusement un solvant organique, et au moins un électrolyte, ledit électrolyte comprenant un sel de métal alcalin répondant à la formule MA et comprenant un cation M⁺ du métal alcalin M et un groupement anionique A⁻.

8. Cellule électrochimique selon l'une quelconque des revendications 1 à 7, dans laquelle le métal alcalin M est choisi parmi Li, Na, K, Rb, Cs et les mélanges de ceux-ci et, avantageusement, parmi Li, Na, K et les mélanges de ceux-ci.

9. Cellule électrochimique selon la revendication 7 ou 8, dans laquelle le groupement anionique A⁻ est choisi parmi ClO₄⁻, AlCl₄⁻, BF₄⁻, PF₆⁻, SbF₆⁻, AsF₆⁻, SiF₆⁻, SCN⁻, FSI⁻, TFSI⁻, BOB⁻, ODBF⁻, SO₃CF₃⁻ et les mélanges de ceux-ci et est, avantageusement, PF₆⁻.

10. Cellule électrochimique selon l'une quelconque des revendications 7 à 9, dans laquelle l'électrolyte est KPF₆.

11. Cellule électrochimique selon l'une quelconque des revendications 7 à 10, dans laquelle l'électrolyte est présent, dans la solution électrolytique, dans une concentration molaire comprise entre 0,5 mol/l et 2 mol/l, avantageusement entre 0,8 mol/l et 1,5 mol/l et, préférentiellement, qui est de l'ordre de 1 mol/l.

12. Cellule électrochimique selon l'une quelconque des revendications 1 à 11, **caractérisée en ce qu'**elle se présente sous la forme d'une pile cylindrique, d'une pile bouton, ou d'une cellule de poche et, de préférence, sous la forme d'une cellule de poche.

13. Système de stockage et de restitution d'énergie électrique comprenant une cellule électrochimique selon l'une quelconque des revendications 1 à 12 et au moins une interface électronique adaptée pour la sélection d'un système électrochimique en fonction d'un degré d'hybridation.

14. Véhicule, en particulier véhicule hybride, comprenant au moins un système de stockage et de restitution d'énergie électrique selon la revendication 13.

## Patentansprüche

1. Elektrochemische Zelle, eine Hülle umfassend, die einen mit einer Elektrolytlösung gefüllten Raum begrenzt, sowie eine Anordnung von mindestens zwei unterschiedlichen elektrochemischen Systemen, ausgewählt aus einem Superkondensator, einem Hybrid-Superkondensator und einem Akkumulator, wobei
- der Superkondensator eine positive Elektrode umfasst, die Aktivkohle und eine negative Elektrode umfasst, die Aktivkohle umfasst,
- der Hybrid-Superkondensator eine positive Elektrode umfasst, die Aktivkohle und eine negative Elektrode umfasst, die ein Metall oder ein kohlenstoffhaltiges Material zur Interkalation mindestens eines Alkalimetalls, mit der Bezeichnung M, umfasst, wobei sich das Material von der Aktivkohle unterscheidet, die an der positiven Elektrode verwendet wird, und
- der Akkumulator eine positive Elektrode umfasst, die ein Oxyd oder eine polyanionische Verbindung eines Übergangsmetalls umfasst und eine negative Elektrode, die ein kohlenstoffhaltiges Material zur Interkalation von mindestens einem Alkalimetall, mit der Bezeichnung M, umfasst, und
wobei die Anordnung in dem mit der Elektrolytlösung gefüllten Raum angeordnet ist und den Hybrid-Superkondensator umfasst.

2. Elektrochemische Zelle nach Anspruch 1, wobei die Anordnung ferner den Superkondensator umfasst.

3. Elektrochemische Zelle nach Anspruch 2, wobei die positive Elektrode des Hybrid-Superkondensators auch die positive Elektrode des Superkondensators darstellt.

4. Elektrochemische Zelle nach Anspruch 1, wobei die Anordnung ferner den Akkumulator umfasst.

5. Elektrochemische Zelle nach Anspruch 4, wobei die negative Elektrode des Hybrid-Superkondensator, wenn sie das kohlenstoffhaltige Material zur Interkalation von mindestens einem Alkalimetall M umfasst, auch die negative Elektrode des Akkumulators darstellt.

6. Elektrochemische Zelle nach einem der Ansprüche 1 bis 5, wobei die Anordnung den Superkondensator, den Hybrid-Superkondensator und den Akkumulator umfasst.

7. Elektrochemische Zelle nach einem der Ansprüche 1 bis 6, wobei die Elektrolytlösung mindestens ein Lösungsmittel umfasst, vorteilhafterweise ein organisches Lösungsmittel, und mindestens einen Elektrolyten, wobei der Elektrolyt ein Alkalimetallsalz der Formel MA umfasst, das ein M⁺-Kation des Alkalimetalls M und eine anionische Gruppe A⁻ umfasst.

8. Elektrochemische Zelle nach einem der Ansprüche 1 bis 7, wobei das Alkalimetall M ausgewählt wird aus Li, Na, K, Rb, Cs und deren Gemischen und vorteilhafterweise aus Li, Na, K und deren Gemischen.

9. Elektrochemische Zelle nach Anspruch 7 oder 8, wobei die anionische Gruppe A⁻ ausgewählt wird aus ClO₄⁻, AlCl₄⁻, BF₄⁻, PF₆⁻, SBF₆⁻, AsF₆⁻, SiF₆⁻, SCN⁻, FSI⁻, TFSI⁻, BOB⁻, ODBF⁻, SO₃CF₃⁻ und deren Gemischen und vorteilhafterweise PF₆⁻.

10. Elektrochemische Zelle nach einem der Ansprüche 7 bis 9, wobei der Elektrolyt KPF₆ ist.

11. Elektrochemische Zelle nach einem der Ansprüche 7 bis 10, wobei der Elektrolyt in der Elektrolytlösung vorhanden ist in einer Molkonzentration zwischen 0,5 mol/l und 2 mol/l, vorteilhafterweise zwischen 0,8 mol/l und 1,5 mol/l und bevorzugt im Bereich von 1 mol/l.

12. Elektrochemische Zelle nach einem der Ansprüche 1 bis 11, **dadurch gekennzeichnet, dass** sie in Form einer zylindrischen Batterie, einer Knopfbatterie oder einer Pouch-Zelle vorliegt, und vorzugsweise in Form einer Pouch-Zelle.

13. System zur Speicherung und Rückgewinnung elektrischer Energie, eine elektrochemische Zelle nach einem der Ansprüche 1 bis 12 umfassend und mindestens eine elektronische Schnittstelle, angepasst für die Auswahl eines elektrochemischen Systems in Abhängigkeit von einem Grad der Hybridisierung.

14. Fahrzeug, insbesondere Hybridfahrzeug, mindestens ein System zur Speicherung und Rückgewinnung elektrischer Energie nach Anspruch 13 umfassend.

## Claims

1. An electrochemical cell comprising a shell delimiting a space filled with an electrolytic solution, as well as a set of at least two different electrochemical systems selected from a supercapacitor, a hybrid supercapacitor and an accumulator, wherein
- the supercapacitor comprises a positive electrode comprising activated carbon and a negative electrode comprising activated carbon,
- the hybrid supercapacitor comprises a positive electrode comprising activated carbon and a negative electrode comprising a metal or a carbonaceous material for intercalating at least one alkaline metal noted as M, said material being different from the activated carbon used at the positive electrode, and
- the accumulator comprises a positive electrode comprising an oxide, or a polyanionic compound, of a transition metal and a negative electrode comprising a carbonaceous material for intercalating at least one alkaline metal noted as M, and
wherein the set is arranged in the space filled with the electrolytic solution and comprises said hybrid supercapacitor.

2. The electrochemical cell according to claim 1, wherein the set further comprises said supercapacitor.

3. The electrochemical cell according to claim 2, wherein the positive electrode of the hybrid supercapacitor is also the positive electrode of the supercapacitor.

4. The electrochemical cell according to claim 1, wherein the set further comprises said accumulator.

5. The electrochemical cell according to claim 4, wherein the negative electrode of the hybrid supercapacitor, when it comprises the carbonaceous material for intercalating at least one alkaline metal M, is also the negative electrode of the accumulator.

6. The electrochemical cell according to any of claims 1 to 5, wherein the set comprises said supercapacitor, said hybrid supercapacitor and said accumulator.

7. The electrochemical cell according to any of claims 1 to 6, wherein the electrolytic solution comprises at least one solvent, advantageously an organic solvent, and at least one electrolyte, said electrolyte comprising an alkaline metal salt fitting the formula MA and comprising a cation M⁺ of the alkaline metal M and an anionic group A⁻.

8. The electrochemical cell according to any of claims 1 to 7, wherein the alkaline metal M is selected from Li, Na, K, Rb, Cs and mixtures thereof and, advantageously, from among Li, Na, K and mixtures thereof.

9. The electrochemical cell according to claim 7 or 8, wherein the anionic group A⁻ is selected from ClO₄⁻, AlCl₄⁻, BF₄⁻, PF₆⁻, SbF₆⁻, AsF₆⁻, SiF₆⁻, SCN⁻, FSI⁻, TFSI⁻, BOB⁻, ODBF⁻, SO₃CF₃⁻ and mixtures thereof and advantageously is PF₆⁻.

10. The electrochemical cell according to any of claims 7 to 9, wherein the electrolyte is KPF₆.

11. The electrochemical cell according to any of claims 7 to 10, wherein the electrolyte is present in the electrolytic solution in a molar concentration comprised between 0,5 mol/I and 2 mol/l, advantageously between 0,8 mol/I and 1,5 mol/I and preferentially which is of the order of 1 mol/l.

12. The electrochemical cell according to any of claims 1 to 11, **characterized in that** it appears as a cylindrical cell, a button cell or a pouch cell and preferably as a pouch cell.

13. A system for storing and restoring electric energy comprising an electrochemical cell according to any of claims 1 to 12 and at least one electronic interface adapted for selecting an electrochemical system according to a degree of hybridization.

14. A vehicle, in particular a hybrid vehicle, comprising at least one system for storing and restoring electric energy according to claim 13.
